# EUROPÄISCHE PATENTANMELDUNG

(11) **EP 3 582 464 A1**
(43) Veröffentlichungstag der Anmeldung: **18.12.2019**
(21) Anmeldenummer: 18177777.2
(22) Anmeldetag: 14.06.2018
(51) Int. Cl.: H04L 29/06, H04W 12/06, H04L 9/08

(54) **VERFAHREN ZUR FUNKTIONAL SICHEREN VERBINDUNGSIDENTIFIZIERUNG UND KOMMUNIKATIONSSYSTEM**

(71) Anmelder: Siemens Aktiengesellschaft, 80333 München (DE)
(72) Erfinder: Barthel, Herbert, 91074 Herzogenaurach (DE); Walter, Maximilian Dr., 90408 Nürnberg (DE)

(57) **Zusammenfassung**

Die Erfindung betrifft ein Verfahren zur funktional sicheren Verbindungsidentifizierung für einen Datenaustausch zwischen einem ersten Kommunikationsteilnehmer (A) und einem zweiten Kommunikationsteilnehmer (B) über einen ersten Kommunikationskanal (1) in einem Kommunikationssystem (10), wobei der erste Kommunikationsteilnehmer (A) einen Verbindungscode (VC) bereitstellt, welcher von dem zweiten Kommunikationsteilnehmer (B) über einen zweiten Kommunikationskanal (2) gelesen wird, wodurch nun der erste und der zweite Kommunikationsteilnehmer (A,B) Kenntnis von dem Verbindungscode (VC) haben, wobei der Verbindungscode (VC) in einem Telegramm (T) vom zweiten Kommunikationsteilnehmer (B) an den ersten Kommunikationsteilnehmer (A) über den ersten Kommunikationskanal (1) mit gesendet wird und der Verbindungscode (VC') aus dem Telegramm (T) mit dem Verbindungscode (VC) den der erste Kommunikationsteilnehmer (A) bereitgestellt hat verglichen wird und für den Fall der Gleichheit wird ein Verbindungsaufbau zwischen dem ersten und zweiten Kommunikationsteilnehmer (A,B) als gültig angesehen und andererseits wird der Verbindungsaufbau als falsch angesehen.

## Beschreibung

Die Erfindung betrifft ein Verfahren zur funktional sicheren Verbindungsidentifizierung für einen Datenaustausch zwischen einem ersten Kommunikationsteilnehmer und einen zweiten Kommunikationsteilnehmer über einen ersten Kommunikationskanal in einem Kommunikationssystem.

Insbesondere bei der industriellen Kommunikation von auf Sicherheit ausgelegten Automatisierungsgeräten ist es eine wichtige Anforderung für funktional sichere Kommunikationsprotokolle (z.B. PROFIsafe) fehlgeleitete Sicherheitstelegramme sicher zu erkennen. Sichere Kommunikationsprotokolle basieren heute üblicherweise auf dem Black-Channel-Prinzip. Der Black-Channel ist nicht sicherheitsbezogen implementiert, so dass dort eine Wahrscheinlichkeit von Fehlern nicht bekannt ist. Insbesondere kann nicht ausgeschlossen werden, dass der Black-Channel sicherheitsbezogene Telegramme einem "falschen" Teilnehmer zustellt. Deshalb muss jeder Empfänger eines Sicherheits-Telegramms eine Authentizität des Senders prüfen (vergleiche IEC 61784-3 Edition 3).

Zur Erkennung von fehlgeleiteten Telegrammen wird nach dem Stand der Technik jeder Verbindung vor einer Inbetriebnahme ein Verbindungscode fest vorgegeben. Dieser ist dem Sender und Empfänger einer Verbindung bekannt. Der Sender modifiziert eine ausgehende Nachricht so, dass der Empfänger sie nur dann als korrekt entgegennimmt, wenn die Codes von Sender und Empfänger übereinstimmen. Im einfachsten Fall bedeutet dies, dass der Verbindungscode in der Nachricht mit gesendet wird.

Dieses Verfahren funktioniert, bei statischen Anlagen, in denen die Art und Anzahl von Kommunikationsteilnehmern vor einer Inbetriebnahme bekannt ist, gut. Kommen aber neue Teilnehmer hinzu, so müssen für alle Verbindungen der jeweils neu hinzugekommenen Teilnehmer neue Codes generiert werden, und die Parameter und gegebenenfalls auch ein Sicherheitsprogramm aller Kommunikationspartner der neuen Teilnehmer müssen angepasst werden.

Ein weiterer Nachteil besteht darin, dass für jedes Kommunikationspaar eine Verbindung projektiert werden muss, und zwar auch dann, wenn Kommunikationsteilnehmer nur abwechselnd miteinander kommunizieren können.

Bei dynamischen Systemen bzw. Anlagen, d.h. bei Systemen mit Kommunikationspartnern, bei denen regelmäßig neue Kommunikationspartner hinzugefügt werden, funktioniert dieses Verfahren nur unzureichend, was an einem folgendem Beispiel verdeutlicht wird.

In einem Lager gibt es drei Regale, an denen jeweils eine sicherheitsbezogene Steuerung angebracht ist. Diese Steuerung führt darüber Buch, mit welchem Gewicht die einzelnen Regalböden jeweils bereits belastet sind.

Drei autonome Transportfahrzeuge entnehmen Gegenstände aus den Regalen oder legen dort neue Gegenstände ab. Die Transportfahrzeuge verfügen ebenfalls über je eine sicherheitsbezogene Steuerung. Vor Ablage von Gegenständen in ein Regal nimmt die Steuerung des Transportfahrzeuges über eine drahtlose Verbindung Kontakt zur entsprechenden Regal-Steuerung auf, diese weist einen Regalboden zu, der das abzulegende Gewicht noch sicher tragen kann. Nach Entnahme eines Gegenstandes wird ebenfalls kommuniziert, um die Daten auf der Steuerung des Regals zu aktualisieren.

Da die Kommunikation drahtlos erfolgt, ist es denkbar, dass eine Verbindung zwischen den falschen Kommunikationsteilnehmern (also z.B. zu einem falschen Regal) aufgebaut wird. Dies könnte zu einer gefährlichen Überlastung eines Regalbodens führen oder einer falschen Regalplatzzuweisung. Daher muss der Aufbau einer Verbindung zu einem falschen Partner sicher erkannt werden.

Die klassische Lösung bestünde darin, insgesamt neun Verbindungen, d.h. jeweils eine für jedes Kommunikationspaar zu projektieren und jeweils einen eindeutigen Verbindungscode zuzuweisen. Unter der Annahme, dass die autonomen Fahrzeuge über einen sicheren Positionssensor verfügen, könnten sie jeweils sicher prüfen, ob sie mit dem richtigen, d.h. vor ihnen liegenden Regal kommunizieren, oder nicht.

Allerdings ist die klassische Lösung nicht flexibel. Soll die Anlage um Regale oder Fahrzeuge erweitert werden, müssen jeweils auch alle Kommunikationspartner angepasst werden: Z.B. müssen bei Hinzufügen eines Regals alle Fahrzeuge neu programmiert und projektiert werden, damit sie mit dem neuen Regal kommunizieren können.

Die Aufgabe der vorliegenden Erfindung besteht nun darin, weiterhin eine funktional sichere Verbindungsidentifikation bei Industrieanlagen zu gewährleisten, aber für einen Betreiber einer solchen Anlage eine Projektierung zu vereinfachen.

Bei einem Verfahren zur funktional sicheren Verbindungsidentifizierung für einen Datenaustausch zwischen einem ersten Kommunikationsteilnehmer und einem zweiten Kommunikationsteilnehmer über einen ersten Kommunikationskanal in einen Kommunikationssystem wird die Aufgabe dadurch gelöst, dass der erste Kommunikationsteilnehmer einen Verbindungscode bereitstellt, welcher von dem zweiten Kommunikationsteilnehmer über einen zweiten Kommunikationskanal gelesen wird, wodurch nun der erste und der zweite Kommunikationsteilnehmer Kenntnis von dem Verbindungscode haben, wobei der Verbindungscode in einem Telegramm vom zweiten Kommunikationsteilnehmer an den ersten Kommunikationsteilnehmer über den ersten Kommunikationskanal zumindest als eine digitale Signatur mit gesendet wird und der Verbindungscode aus dem Telegramm mit dem Verbindungscode den der erste Kommunikationsteilnehmer bereitgestellt hat, verglichen wird, und für den Fall der Gleichheit wird ein Verbindungsaufbau zwischen dem ersten und zweiten Kommunikationsteilnehmer als gültig angesehen und andererseits wird der Verbindungsaufbau als falsch angesehen.

Im Sinne der Erfindung bedeutet das der Verbindungscode zumindest als digitale Signatur mit gesendet wird, dass der Verbindungscode nicht zwangsläufig als "Klartext" übertragen wird, sondern er kann auch in eine zu übertragene Prüfsumme mit einberechnet werden.

Oder allgemein gesprochen: Der erste Kommunikationsteilnehmer modifiziert seine Nachricht oder das Telegramm unter Verwendung des Verbindungscodes so, dass der zweite Kommunikationsteilnehmer die Nachricht entgegennimmt, wenn der Verbindungscode auf der Seite des zweiten Kommunikationsteilnehmers aus der Modifikation zurückgewonnen werden konnte.

Vorteilhaft ist es sogar, wenn der Verbindungscode in dem ersten Kommunikationspartner dynamisch erzeugt wird. D.h. es wird vorgeschlagen, zur sicheren Verbindungsauthentifizierung keinen fest parametrisierten Wert, sondern einen dynamischen Wert zu verwenden, dieser wird erst zur Laufzeit generiert und über einen unabhängigen, den zweiten Kommunikationskanal, ausgetauscht. Dieser zweite Kommunikationskanal hat vorzugsweise die Eigenschaft, dass er nur dann aktiv wird, wenn eine örtliche Gegebenheit/ oder Nähe der Kommunikationsteilnehmer erfüllt ist.

Vorzugsweise wird dazu der zweite Kommunikationskanal nur aktiviert wenn der erste Kommunikationsteilnehmer und der zweite Kommunikationsteilnehmer sich in einen räumlichen Wechselwirkungsbereich befinden.

Ein räumlicher Wechselwirkungsbereich in einer Maschinenhalle umfasst beispielsweise einen Umkreis um das bereits erwähnte Regal. Dabei kann der räumliche Wechselwirkungsbereich beispielsweise derart als ein räumlicher Bereich vorgesehen und ausgestaltet sein, dass bei einem im räumlichen Wechselwirkungsbereich befindlichen ersten und zweiten Kommunikationsteilnehmer diese mit Näherungsschalter, schwachen Funksignalen, Lichtschranken etc. aufeinander wirken können.

Vorzugsweise wird für den ersten Kommunikationskanal eine drahtlose Verbindung genutzt und für den zweiten Kommunikationskanal wird eine optische Verbindung aus einer Kamera/Display Kombination oder einer Laser-Sender-Empfänger-Kombination, eine akustische Verbindung aus einer SchallGeber-Empfänger-Kombination oder eine elektromagnetische Verbindung, insbesondere eine Nahfeldkommunikation, genutzt.

Für den Fall, dass eine Kamera/Display Kombination eingesetzt wird, wird der zweite Kommunikationskanal dadurch gebildet, dass der erste Kommunikationsteilnehmer ein Display zur Anzeige des Verbindungscodes benutzt und der zweite Kommunikationsteilnehmer eine Kamera zum Erfassen des Verbindungscodes benutzt.

Auch wird die eingangs genannte Aufgabe durch ein Kommunikationssystem mit einem ersten Kommunikationsteilnehmer und einem zweiten Kommunikationsteilnehmer, welche über einen ersten Kommunikationskanal Daten austauschen, dadurch gelöst, dass zur funktional sicheren Verbindungsidentifizierung für einen Datenaustausch zwischen dem ersten Kommunikationsteilnehmer und dem zweiten Kommunikationsteilnehmer der erste Kommunikationsteilnehmer ausgestaltet ist, einen Verbindungscode bereitzustellen, und der zweite Kommunikationsteilnehmer ausgestaltet ist, den Verbindungscode zu erfassen, wodurch ein zweiter Kommunikationskanal zwischen den beiden Kommunikationsteilnehmern realisiert ist, der zweite Kommunikationsteilnehmer ist weiterhin dazu ausgestaltet, bei einem Datenaustausch über den ersten Kommunikationskanal den Verbindungscode in einem Telegramm vom zweiten Kommunikationsteilnehmer an den ersten Kommunikationsteilnehmer mit zu senden. Der erste Kommunikationsteilnehmer ist weiterhin dazu ausgestaltet, den Verbindungscode aus dem Telegramm mit dem Verbindungscode den der erste Kommunikationsteilnehmer bereitgestellt hat, zu vergleichen und für den Fall der Gleichheit wird ein Verbindungsaufbau zwischen dem ersten und dem zweiten Kommunikationsteilnehmer als gültig angesehen und andererseits wird der Verbindungsaufbau als falsch angesehen.

Dieses Verfahren und das Kommunikationssystem lassen sich dann mit Vorteil auf beliebige Systeme mit beweglichen Komponenten übertragen, z.B. auf Krane mit mehreren Krankatzen, Roboter mit austauschbaren Werkzeugen, Spannrahmen in der Automobilfertigung, Durchfahrt von Binnenschiffen bei beweglichen Brücken, etc.. Bei Steuerungssystemen mit speicherprogrammierbaren Steuerungen könnte zur Darstellung des Verbindungscodes ein kleines Display auf der Steuerung genutzt werden. Es kann aber auch jeder andere Bildschirm beispielsweise ein HMI-Panel, verwendet werden.

Zusammenfassend kann gesagt werden, dass erfindungsgemäß nun ein Austausch des Verbindungscodes über einen diversitären Kanal zur Laufzeit erfolgt. Weiterhin ist es vorteilhaft einen dynamischen Code zu verwenden, um sicher zu stellen, dass ein veralteter Code mit Sicherheit nicht mehr gültig ist, bzw. um für diesen unabhängigen zweiten Kommunikationskanal nicht sichere Komponenten (wie Bildschirm und Kamera) verwenden zu können. Der diversitäre Kanal kann beispielsweise ein optischer Kanal sein. Mit Vorteil könnten QR-Codes auf dem Display zur Übertragung dargestellt werden und mit der Kamera wahrgenommen werden. Der wesentliche Vorteil ist, dass die Verbindungscodes nun nicht mehr vorab projektiert werden müssen, man erhält eine Plug-and-Play Funktionalität. Neue Teilnehmer können jederzeit hinzugefügt werden, wie bei dem Beispiel mit den Regalen und den Transportfahrzeugen bereits erwähnt. Den so geschaffenen zweiten diversitären Kommunikationskanal kann man zusätzlich zur sicheren Positionsermittlung verwenden. Dann wäre ein sicherer Positionssensor nicht mehr erforderlich.

Die Zeichnung zeigt ein Ausführungsbeispiel der Erfindung, dabei zeigt die
- FIG 1: das Prinzip der sicheren Verbindungsidentifizierung und
- FIG 2: ein Kommunikationssystem mit Regal und Transportfahrzeugen.

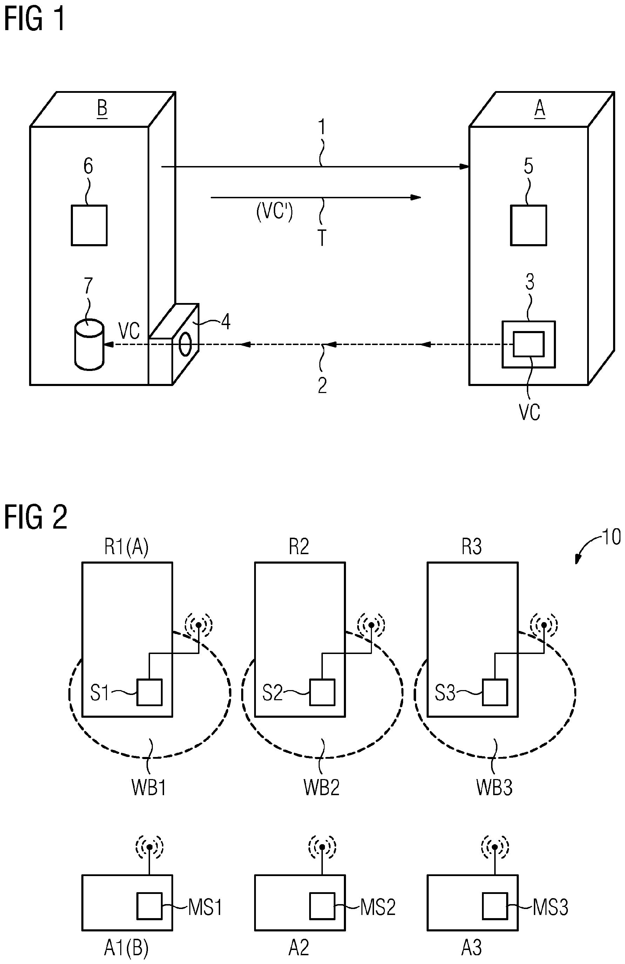

Gemäß FIG 1 ist ein erster Kommunikationsteilnehmer A und ein zweiter Kommunikationsteilnehmer B, welche über einen ersten Kommunikationskanal 1 Daten austauschen, dargestellt. Um für eine funktional sichere Verbindungsidentifizierung zwischen den beiden Kommunikationsteilnehmern A,B zu sorgen, wird ein zweiter Kommunikationskanal 2 bereitgestellt, quasi als ein diversitärer Seitenkanal zu dem ersten Kommunikationskanal 1. Damit hat man zur funktional sicheren Verbindungsidentifizierung für den Datenaustausch zwischen dem ersten Kommunikationsteilnehmer A und dem zweiten Kommunikationsteilnehmer B einen zweiten Kommunikationskanal 2 geschaffen, über den ein Verbindungscode VC ausgetauscht werden kann. Zum Bereitstellen des Verbindungscodes VC weist der erste Kommunikationsteilnehmer A ein Display 3 auf. Zum Erfassen des Verbindungscodes VC weist der zweite Kommunikationsteilnehmer B eine Kamera 4 auf. Der über die Kamera 4 ermittelte Verbindungscode VC wird im zweiten Kommunikationsteilnehmer B in einem Speichermittel 7 abgespeichert.

Der zweite Kommunikationsteilnehmer B kommuniziert mit dem ersten Kommunikationsteilnehmer A über den ersten Kommunikationskanal 1 und sendet darüber ein Telegramm T.

Der zweite Kommunikationsteilnehmer B ist mit einer Packkomponente 6 dazu ausgestaltet, bei einem Datenaustausch über den ersten Kommunikationskanal 1 den Verbindungscode VC in dem Telegramm T vom zweiten Kommunikationsteilnehmer B an den ersten Kommunikationsteilnehmer A mit zu senden.

Der erste Kommunikationsteilnehmer A ist weiterhin dazu ausgestaltet, den Verbindungscode VC' aus dem Telegramm T mit dem Verbindungscode VC den der erste Kommunikationsteilnehmer A selber bereitgestellt hat, zu vergleichen. Für den Vergleich steht ein Vergleichsmittel 5 zur Verfügung. Für den Fall der Gleichheit wird ein Verbindungsaufbau zwischen dem ersten und zweiten Kommunikationsteilnehmer A,B als gültig angesehen und andererseits wird der Verbindungsaufbau als falsch angesehen.

Die FIG 2 zeigt ein Beispiel eines dynamischen Anlagensystems, d.h. ein System mit Kommunikationspartnern, bei denen regelmäßig neue Kommunikationspartner hinzugefügt werden können. Das beispielhafte dynamische System weist ein Kommunikationssystem 10 mit einem ersten Regal R1, einem zweiten Regal R2 und einem dritten Regal R3 auf. In dem Regalen R1,R2,R3 befindet sich jeweils eine sicherheitsgerichtete Steuerung S1,S2,S3. Ein erstes autonomes Transportfahrzeug A1, ein zweites autonomes Transportfahrzeug A2 und ein drittes autonomes Transportfahrzeug A3 können die Regale R1,R2,R3 anfahren und dort Material ablegen. Die Steuerungen S1,S2,S3 in den Regalen R1,R2,R3 führen darüber Buch mit welchen Gewicht die einzelnen Regalböden jeweils bereits belastet sind.

Die autonomen Transportfahrzeuge A1,A2,A3 verfügen ebenfalls über je eine sicherheitsbezogene Steuerung, eine erste mobile Steuerung MS1, eine zweite mobile Steuerung MS2 und eine dritte mobile Steuerung MS3. Vor Ablage von Material in ein Regal R1,R2,R3 nimmt das jeweilige mobile Transportfahrzeug A1,A2,A3 über eine drahtlose Verbindung Kontakt zu der entsprechenden sicherheitsbezogenen Steuerung S1,S2,S3 der Regale R1,R2,R3 auf.

Da die Kommunikation drahtlos erfolgt, ist es denkbar, dass eine Verbindung zwischen falschen Kommunikationspartnern (also z.B. eine Verbindung von einen Transportfahrzeug zu einem falschen Regal) aufgebaut wird. Dies könnte zu einer gefährlichen Überlastung eines Regalbodens führen oder es wird ein falscher Regalplatz zugewiesen. Daher muss der Aufbau einer Verbindung zwischen einem Transportfahrzeug A1,A2,A3 und einem Regal R1,R2,R3 sicher erkannt werden.

Um das erste Regal R1 befindet sich ein erster Wechselwirkungsbereich WB1, um das zweite Regal R2 befindet sich ein zweiter Wechselwirkungsbereich WB2 und um das dritte Regal R3 befindet sich ein dritter Wechselwirkungsbereich WB3. Fährt nun beispielsweise das erste autonome Transportfahrzeug A1 das erste Regal R1 an, kann man den darauffolgenden Kommunikationsaufbau mit der FIG 1 vergleichen. Das erste Regal R1 entspräche dann den ersten Kommunikationsteilnehmer A und das erste autonome Transportfahrzeug A1 entspricht dann den zweiten Kommunikationsteilnehmer B. Befindet sich das erste autonome Transportfahrzeug A1 im ersten Wechselwirkungsbereich WB1 so kann es über einen zweiten Kommunikationskanal 2 eine zusätzliche Verbindung zu dem ersten Regal R1 bzw. zu der ersten sicherheitsgerichteten Steuerung S1 aufbauen. Dazu wird auf einen Display der ersten sicherheitsgerichteten Steuerung S1 ein QR-Code generiert, welcher über eine Kamera des ersten autonomen Transportfahrzeuges A1 aufgenommen wird. Das folgende sicherheitsbezogene Kommunikationsprinzip ist gemäß FIG 1 beschrieben.

In diesem Beispiel könnte der dynamische Wert für einen Verbindungscode von den sicherheitsgerichteten Steuerungen S1,S2,S3 der Regale R1,R2,R3 erzeugt werden und mit Hilfe eines QR-Codes auf den jeweiligen Displays der Steuerungen S1,S2,S3 angezeigt werden. Die Transportfahrzeuge A1,A2,A3 fahren vor die Displays der Steuerungen S1,S2,S3 und lesen den QR-Code mit Hilfe einer Kamera. Da dann der Code den beiden Kommunikationsteilnehmern A,B bekannt ist, kann er zur Prüfung der korrekten Zuordnung der beiden Kommunikationspartner dienen. Dies funktioniert unabhängig von einer Topologie und den Kommunikationsmedium, d.h. insbesondere auch bei drahtloser Kommunikation.

Sollte dennoch bei der Generierung des QR-Codes ein Fehler auftreten oder beim Einlesen mit Hilfe der Kamera ein Fehler entstehen, führt dies dazu, dass die sicherheitsbezogene Verbindung nicht zustande kommt. Es handelt sich also um einen ungefährlichen Fehler. Daher brauchen weder die Erzeugung noch die Erkennung des QR-Codes bzw. des Verbindungscodes VC sicherheitsbezogen zu erfolgen, dies ist ein weiterer Vorteil. Es können also z.B. das bereits vorhandene Display einer Steuerung und eine gewöhnliche Handy-Kamera vorteilhafterweise verwendet werden.

## Patentansprüche

1. Verfahren zur funktional sicheren Verbindungsidentifizierung für einen Datenaustausch zwischen einem ersten Kommunikationsteilnehmer (A) und einem zweiten Kommunikationsteilnehmer (B) über einen ersten Kommunikationskanal (1) in einem Kommunikationssystem (10),
**dadurch gekennzeichnet, dass**
der erste Kommunikationsteilnehmer (A) einen Verbindungscode (VC) bereitstellt, welcher von dem zweiten Kommunikationsteilnehmer (B) über einen zweiten Kommunikationskanal (2) gelesen wird, wodurch nun der erste und der zweite Kommunikationsteilnehmer (A,B) Kenntnis von dem Verbindungscode (VC) haben, wobei der Verbindungscode (VC) in einem Telegramm (T) vom zweiten Kommunikationsteilnehmer (B) an den ersten Kommunikationsteilnehmer (A) über den ersten Kommunikationskanal (1) zumindest als eine digitale Signatur mit gesendet wird und der Verbindungscode (VC') aus dem Telegramm (T) mit dem Verbindungscode (VC) den der erste Kommunikationsteilnehmer (A) bereitgestellt hat verglichen wird und für den Fall der Gleichheit wird ein Verbindungsaufbau zwischen dem ersten und zweiten Kommunikationsteilnehmer (A,B) als gültig angesehen und andererseits wird der Verbindungsaufbau als falsch angesehen.

2. Verfahren nach Anspruch 1, wobei der Verbindungscode (VC) im ersten Kommunikationspartner (A) dynamisch erzeugt wird.

3. Verfahren nach Anspruch 1 oder 2, wobei der zweite Kommunikationskanal (2) aktiviert wird, wenn der erste Kommunikationsteilnehmer (A) und der zweite Kommunikationsteilnehmer (B) sich in einem räumlichen Wechselwirkungsbereich (WB1) befinden.

4. Verfahren nach einem der Ansprüche 1 bis 3, wobei für den ersten Kommunikationskanal (1) eine drahtlose Verbindung genutzt wird und für den zweiten Kommunikationskanal (2) eine optische Verbindung aus
- einer Kamera/Display Kombination oder
- einer Laser-Sender/Empfänger Kombination,
eine akustische Verbindung aus
- einer Schall-Geber/Empfänger Kombination oder
- eine elektromagnetische Verbindung, insbesondere eine Nahfeldkommunikation, genutzt wird.

5. Verfahren nach Anspruch 4, wobei bei einer Kamera/Display Kombination für den zweiten Kommunikationskanal (2) der erste Kommunikationsteilnehmer (1) ein Display (3) zur Anzeige des Verbindungscodes (VC) benutzt und der zweite Kommunikationsteilnehmer (2) eine Kamera zum Erfassen des Verbindungscodes (VC) benutzt.

6. Kommunikationssystem (10) mit einem ersten Kommunikationsteilnehmer (A) und einem zweiten Kommunikationsteilnehmer (B), welche über einen ersten Kommunikationskanal (1) Daten austauschen,
**dadurch gekennzeichnet, dass**
zur funktional sicheren Verbindungsidentifizierung für einen Datenaustausch zwischen dem ersten Kommunikationsteilnehmer (A) und dem zweiten Kommunikationsteilnehmer (B) der erste Kommunikationsteilnehmer (A) ausgestaltet ist, einen Verbindungscode (VC) bereitzustellen, und der zweite Kommunikationsteilnehmer (B) ausgestaltet ist, den Verbindungscode (VC) zu erfassen, wodurch ein zweiter Kommunikationskanal (2) zwischen den beiden Kommunikationsteilnehmern (A,B) realisiert ist,
- der zweite Kommunikationsteilnehmer (B) ist weiterhin dazu ausgestaltet bei einem Datenaustausch über den ersten Kommunikationskanal (1) den Verbindungscode (VC) in einem Telegramm (T) vom zweiten Kommunikationsteilnehmer (B) an den ersten Kommunikationsteilnehmer (A) mit zu senden,
- der erste Kommunikationsteilnehmer (A) ist weiterhin dazu ausgestaltet den Verbindungscode (VC') aus dem Telegramm (T) mit dem Verbindungscode (VC) den der erste Kommunikationsteilnehmer (A) bereitgestellt hat zu vergleichen und für den Fall der Gleichheit wird ein Verbindungsaufbau zwischen dem ersten und zweiten Kommunikationsteilnehmer (A,B) als gültig angesehen und andererseits wird der Verbindungsaufbau als falsch angesehen.
